# EUROPEAN PATENT APPLICATION

(11) **EP 4 768 146 A1**
(43) Date of publication of application: **01.07.2026**
(21) Application number: 25214689.9
(22) Date of filing: 10.11.2025
(51) Int. Cl.: B21D 19/08, B21D 28/26, B21D 37/16, B21D 47/01, B21D 53/88, B62D 25/04, B23K 5/00

(54) **VEHICLE BODY FRAME MEMBER AND MANUFACTURING METHOD OF THE SAME**

(30) Priority: 27.12.2024 JP 2024232162
(71) Applicant: TOYOTA JIDOSHA KABUSHIKI KAISHA, Toyota-shi, Aichi-ken 471-8571 (JP)
(72) Inventor: IHARA, Tomoaki, Aichi-ken 471-8571 (JP); AMEMIYA, Koji, Aichi-ken 471-8571 (JP); SUZUKI, Ryo, Aichi-ken 471-8571 (JP)
(74) Representative: D Young & Co LLP

(57) **Abstract**

A vehicle body frame member according to one aspect of the present disclosure is a vehicle body frame member having a tubular shape and including: a first steel sheet having an opening; and a second steel sheet welded to the first steel sheet. A burring portion that rises toward the second steel sheet is provided in a peripheral portion of the opening of the first steel sheet.

## Description

### BACKGROUND OF THE INVENTION

### 1. Field of the Invention

The present disclosure relates to vehicle body frame members and methods for manufacturing the same.

### 2. Description of Related Art

As disclosed in Japanese Unexamined Patent Application Publication No. 2020-116635 (JP 2020-116635 A), the inventors developed a technique in which a peripheral portion of a through hole formed in a steel sheet by punching is subjected to induction heating to remove strain and subsequently to a burring process. The burring process is also referred to as stretch flanging.

### SUMMARY OF THE INVENTION

In vehicle body frame members such as pillars, side members, and rocker panels (also referred to as side sills), relatively large openings are sometimes formed for mounting other components or as passages for wire harnesses. In vehicle body frame members with such openings, stress concentrates around the peripheries of the openings during bending deformation, leading to a reduction in strength.
This issue becomes more pronounced as the strength of the steel sheet forming the vehicle body frame member increases.

In view of these circumstances, the present disclosure provides a vehicle body frame member and a method for manufacturing the same that can relieve stress concentration in a peripheral portion of an opening during bending deformation.

A vehicle body frame member according to one aspect of the present disclosure is
a vehicle body frame member having a tubular shape and including: a first steel sheet having an opening; and a second steel sheet welded to the first steel sheet.
A burring portion that rises toward the second steel sheet is provided in a peripheral portion of the opening of the first steel sheet.

As described above, in the vehicle body frame member according to the present embodiment, the burring portion that rises toward the second steel sheet is provided in the peripheral portion of the opening of the first steel sheet. Accordingly, stress concentration in the peripheral portion of the opening can be relieved.

A method for manufacturing a vehicle body frame member according to one aspect of the present disclosure includes:
subjecting a peripheral portion of an opening formed in a first steel sheet to induction heating to remove strain, and subsequently forming a burring portion by subjecting the peripheral portion to burring; and
arranging the first steel sheet and a second steel sheet opposite to each other with the burring portion facing inward, and welding the first steel sheet and the second steel sheet together to form a vehicle body frame member having a tubular shape.

As described above, in the method for manufacturing a vehicle body frame member according to one aspect of the present disclosure, the peripheral portion of the opening formed in the first steel sheet is subjected to induction heating to remove strain and subsequently to burring to form the burring portion. Accordingly, stress concentration in the peripheral portion of the opening can be relieved.

The present disclosure provides a vehicle body frame member and a method for manufacturing the same that can relieve stress concentration in a peripheral portion of an opening during bending deformation.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic perspective view of a vehicle body frame member according to a first embodiment;
FIG. 2 is a schematic cross-sectional view of the vehicle body frame member according to the first embodiment;
FIG. 3 is a partial plan view showing an example of an opening 11 of a first steel sheet 10;
FIG. 4 is a graph showing variations in maximum load and displacement at fracture for burring portions having different heights H; and
FIG. 5 is a flowchart illustrating a method for manufacturing a vehicle body frame member according to the first embodiment.

### DETAILED DESCRIPTION OF EMBODIMENTS

Specific embodiments of the present disclosure will be described in detail below with reference to the drawings. However, the present disclosure is not limited to the following embodiments. For clarity of explanation, the following description and drawings have been simplified as appropriate.

### First Embodiment

### Configuration of Vehicle Body Frame Member

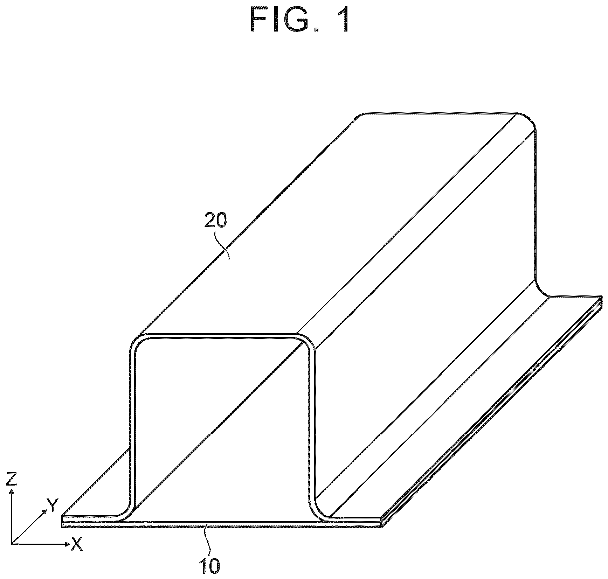

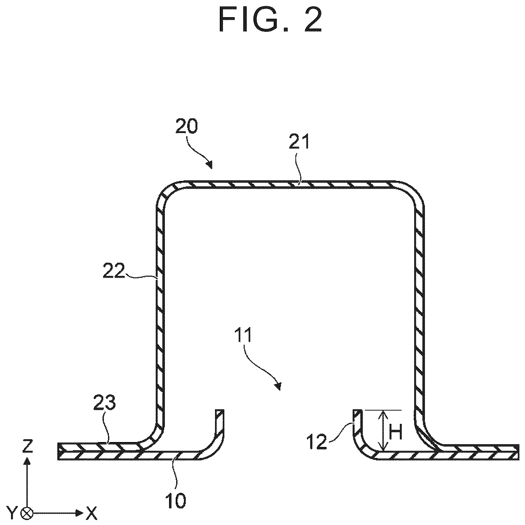

First, the configuration of a vehicle body frame member according to a first embodiment will be described with reference to FIGS. 1 and 2. FIG. 1 is a schematic perspective view of the vehicle body frame member according to the first embodiment. FIG. 2 is a schematic cross-sectional view of the vehicle body frame member according to the first embodiment. The vehicle body frame member shown in FIGS. 1 and 2 is not particularly limited, but may be, for example, a pillar, a side member, or a rocker panel.

It should be understood that the right-handed XYZ orthogonal coordinate system shown in FIGS. 1 and 2 is provided merely for convenience in explaining the positional relationship of the components. In FIG. 1 etc. the positive Z-axis direction represents the vertical upward direction, and the XY plane represents the horizontal plane. These definitions apply throughout the drawings.

As shown in FIGS. 1 and 2, the vehicle body frame member includes two steel sheets, namely a first steel sheet 10 and a second steel sheet 20, both extending in the Y-axis direction. As shown in FIG. 1, the vehicle body frame member is a rectangular tubular member in which the first steel sheet 10 and the second steel sheet 20 are welded together at both ends in the width direction (X-axis direction).
As shown in FIG. 2, the first steel sheet 10 that is a flat sheet has an opening 11, and a burring portion 12 rises upward (in the positive Z-axis direction) from a peripheral portion of the opening 11 toward the second steel sheet 20.

The opening 11 shown in FIG. 2 may be formed by, for example, punching the first steel sheet 10. The burring portion 12 is formed by subjecting the peripheral portion of the opening 11 to induction heating to remove strain and subsequently to a burring process. The burring portion 12 can be stretched by repeatedly subjecting the peripheral portion of the opening 11 to induction welding and burring. That is, the height H of the burring portion 12 shown in FIG. 2 can be increased.

For example, the peripheral portion of the opening 11 is induction-heated by inserting an induction heating coil into the opening 11. With this simple configuration, the peripheral portion of the opening 11 can be effectively heated. The heating conditions may be, for example, a heating temperature of about 500°C to 830°C and a heating time of 10 seconds or less. The heating time may exceed 10 seconds.

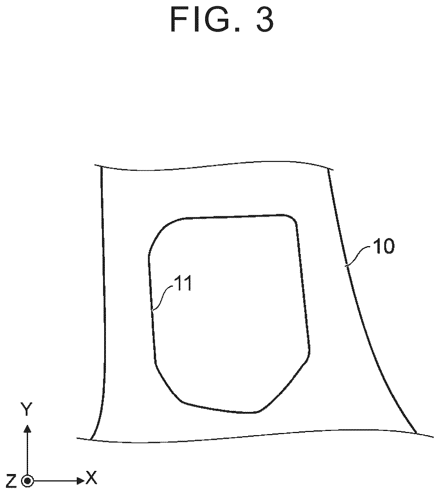

FIG. 3 is a partial plan view showing an example of the opening 11 of the first steel sheet 10. As shown in FIG. 3, the first steel sheet 10 is an inner pillar of a center pillar and has a polygonal opening 11. In this case, the second steel sheet 20 is an outer pillar.

The opening 11 may be used, for example, for mounting other components or as a passage for a wire harness. The width of the opening 11 in the X-axis direction may be, for example, 50% or more of the width of the first steel sheet 10 in the X-axis direction, and may be 70% or more. Although the opening 11 shown in FIG. 3 has a complex, asymmetric polygonal shape, it may instead have a simple shape such as a circle, an ellipse, or a rectangle (including a square).

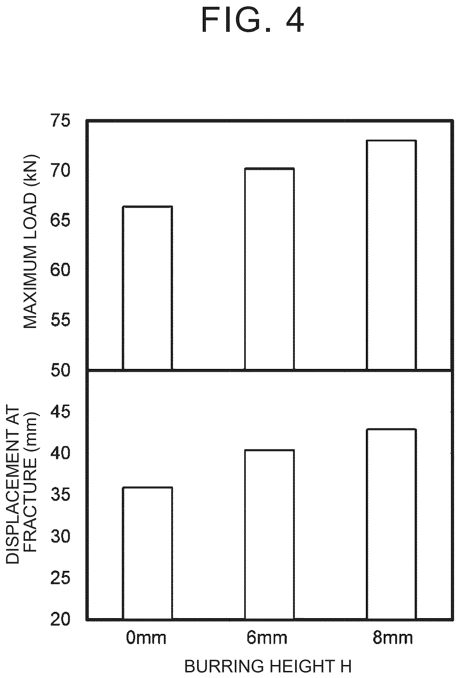

FIG. 4 is a graph showing variations in maximum load and displacement at fracture obtained in a bending test for burring portions having different heights H. FIG. 4 shows the maximum load (kN) and the displacement at fracture (mm) for the burring portions 12 having a height H of 0 mm, 6 mm, and 8 mm. The burring portion 12 with a height H of 0 mm means that no burring process has been performed.

As shown in FIG. 4, as the height H of the burring portion 12 increases, both the maximum load and the displacement at fracture in the bending test increase. By forming the burring portion 12 in the peripheral portion of the opening 11 of the first steel sheet 10 in this manner, stress concentration in the peripheral portion of the opening 11 during bending deformation of the vehicle body frame member can be relieved.

As the height H of the burring portion 12 increases, stress concentration in the peripheral portion of the opening 11 can be relieved more effectively, but the burring process becomes more difficult and productivity is reduced. Therefore, the height H of the burring portion 12 is, for example, 2 mm to 15 mm, preferably 4 mm to 10 mm. When the height H of the burring portion 12 is 2 mm or more, stress concentration in the peripheral portion of the opening 11 during bending deformation can be relieved. When the height H of the burring portion 12 is 15 mm or less, the burring portion 12 can be formed more easily, leading to high productivity.

As shown in FIGS. 1 and 2, the second steel sheet 20 is a steel sheet with a hat-shaped cross-section, disposed to face the burring portion 12 of the first steel sheet 10. More specifically, the second steel sheet 20 includes a top wall 21, side walls 22, and flange portions 23, all extending in the Y-axis direction. Specifically, a pair of side walls 22 extends downward from the ends of the top wall 21 in the width direction (X-axis direction). Each flange portion 23 extends outward from a corresponding one of the lower ends (ends in the negative Z-axis direction) of the side walls 22. The flange portions 23 are welded to the first steel sheet 10.

The first steel sheet 10 and the second steel sheet 20 are not particularly limited, but may each have, for example, a thickness of about 1 mm to 3 mm and a tensile strength of 440 MPa or more. The first steel sheet 10 and the second steel sheet 20 may also be high-strength steel sheets having a tensile strength of 590 MPa or more, or even 780 MPa or more. By using high-strength steel sheets, the steel sheet thickness can be reduced, and the weight of the vehicle body can be reduced.

As described above, the higher the strength of the first steel sheet 10, the more pronounced the stress concentration in the peripheral portion of the opening 11 during bending deformation. Therefore, it has conventionally been difficult to use a high-strength steel sheet for the first steel sheet 10 having the opening 11. However, forming the burring portion 12 in the peripheral portion of the opening 11 enables a high-strength steel sheet to be used for the first steel sheet 10.

As described above, in the vehicle body frame member according to the present embodiment, the burring portion 12 that rises toward the second steel sheet 20 is formed in the peripheral portion of the opening 11 of the first steel sheet 10. This configuration can relieve stress concentration in the peripheral portion of the opening 11 of the first steel sheet 10 during bending deformation of the vehicle body frame member.

As long as the first steel sheet 10 with the opening 11 and the second steel sheet 20 are welded together to form a tubular vehicle body frame member, the shapes of the first steel sheet 10 and the second steel sheet 20 are not particularly limited. For example, the first steel sheet 10 may have a hat-shaped cross-section with the opening 11 formed in its top wall. In that case, the second steel sheet 20 may be hat-shaped in cross-section or may be flat.

### Method for Manufacturing Vehicle Body Frame Member

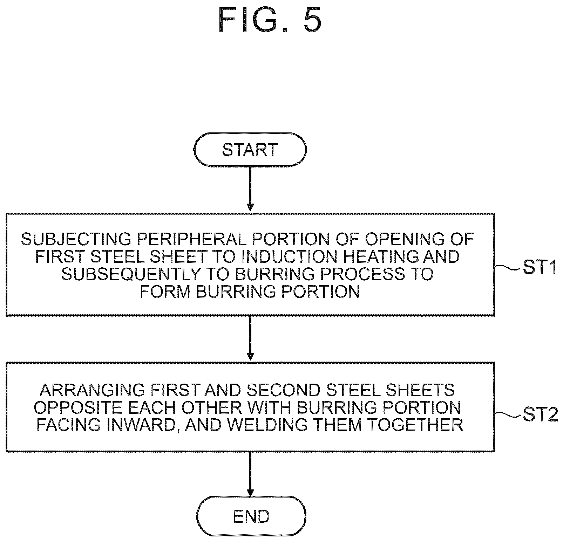

Next, a method for manufacturing a vehicle body frame member according to the first embodiment will be described with reference to FIG. 5. FIG. 5 is a flowchart illustrating the method for manufacturing a vehicle body frame member according to the first embodiment.

First, as shown in FIG. 5, the peripheral portion of the opening 11 formed in the first steel sheet 10 is subjected to induction heating and subsequently to a burring process to form a burring portion 12 (step ST1). For example, an induction heating coil is inserted into the opening 11, and the peripheral portion of the opening 11 is induction-heated to remove strain. The peripheral portion of the opening 11 is subsequently subjected to a burring process. Step ST1 may be repeated to stretch the burring portion 12. As shown in the bending test results of FIG. 4, stretching the burring portion 12 can further relieve stress concentration in the peripheral portion of the opening 11.

Thereafter, as shown in FIG. 5, the first steel sheet 10 and the second steel sheet 20 are arranged opposite to each other with the burring portion 12 facing inward, and are welded together (step ST2). More specifically, as shown in FIG. 2, the first steel sheet 10 and the second steel sheet 20 are welded together at both ends in the width direction, and thus integrated to form a rectangular tubular vehicle body frame member.

As described above, in the method for manufacturing a vehicle body frame member according to the present embodiment, the peripheral portion of the opening 11 formed in the first steel sheet 10 is subjected to induction heating and subsequently to a burring process to form the burring portion 12. As a result, stress concentration in the peripheral portion of the opening 11 during bending deformation of the manufactured vehicle body frame member can be relieved.

The present disclosure is not limited to the embodiment described above, and various modifications may be made as appropriate without departing from the scope of the disclosure.

## Claims

1. A vehicle body frame member having a tubular shape, the vehicle body frame member comprising:
a first steel sheet having an opening; and
a second steel sheet welded to the first steel sheet,
wherein a burring portion that rises toward the second steel sheet is provided in a peripheral portion of the opening of the first steel sheet.

2. The vehicle body frame member according to claim 1, wherein:
the first steel sheet is flat; and
the second steel sheet has a hat-shaped cross-section.

3. The vehicle body frame member according to claim 1 or 2, wherein the opening has a polygonal shape.

4. A method for manufacturing a vehicle body frame member, the method comprising:
subjecting a peripheral portion of an opening formed in a first steel sheet to induction heating to remove strain, and subsequently forming a burring portion by subjecting the peripheral portion to burring; and
arranging the first steel sheet and a second steel sheet opposite to each other with the burring portion facing inward, and welding the first steel sheet and the second steel sheet together to form a vehicle body frame member having a tubular shape.

5. The method according to claim 4, wherein, in the forming the burring portion, the peripheral portion is repeatedly subjected to the induction heating and the burring to stretch the burring portion.
